(19) Europäisches Patentamt / European Patent Office / Office européen des brevets

(11) **EP 3 438 174 B1**

(12) **EUROPEAN PATENT SPECIFICATION**

(45) Date of publication and mention
of the grant of the patent:
**29.07.2020   Bulletin 2020/31**

(51) Int Cl.:
***C08J 9/18*** *(2006.01)*   ***C08J 9/12*** *(2006.01)*
***C08J 9/232*** *(2006.01)*

(21) Application number: **17774909.0**

(22) Date of filing: **27.03.2017**

(86) International application number:
**PCT/JP2017/012343**

(87) International publication number:
**WO 2017/170372 (05.10.2017 Gazette 2017/40)**

(54) **THERMOPLASTIC POLYURETHANE FOAM PARTICLES**

THERMOPLASTISCHE POLYURETHANSCHAUMSTOFFTEILCHEN

PARTICULES DE MOUSSE DE POLYURÉTHANE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **31.03.2016   JP 2016072415**

(43) Date of publication of application:
**06.02.2019   Bulletin 2019/06**

(73) Proprietor: **JSP Corporation**
**Chiyoda-ku, Tokyo 100-0005 (JP)**

(72) Inventors:
• **KOSHITA, Nobumasa**
**Yokkaichi-shi**
**Mie 510-0881 (JP)**
• **HAYASHI, Tatsuya**
**Yokkaichi-shi**
**Mie 510-0881 (JP)**
• **OIKAWA, Masaharu**
**Yokkaichi-shi**
**Mie 510-0881 (JP)**

(74) Representative: **Gille Hrabal**
**Brucknerstrasse 20**
**40593 Düsseldorf (DE)**

(56) References cited:
**EP-A1- 2 719 721        EP-A2- 1 683 828
WO-A1-2012/065926    WO-A1-2015/052265
WO-A1-2015/169164    WO-A1-2016/194737
CN-A- 104 231 592      CN-A- 104 974 370
JP-A- 2004 143 269     JP-A- 2007 091 840
JP-A- 2012 077 178     JP-A- 2014 062 213
US-A1- 2012 329 892**

**Description**

Technical Field

The present invention relates to expanded beads of thermoplastic polyurethane.

Background Art

A molded article of expanded beads of thermoplastic polyurethane is excellent in wear resistance, cold resistance, and repulsion elasticity and is further high in mechanical strength, and therefore, it is used for a variety of applications, such as cushioning materials, vibration-damping materials, sports goods, and automobile members. The thermoplastic polyurethane is hereinafter also referred to as "TPU". However, the production technology of expanded TPU beads is still developing and has not been established yet. Thus, there are proposed a variety of production technologies of expanded TPU beads.

For example, in the production method of an expanded TPU molded article as described in PTL 1, TPU resin beads are impregnated with an inorganic or organic gas or low-boiling liquid blowing agent to obtain expandable TPU beads, the expandable TPU beads are heated for primary expansion, the obtained primarily expanded beads are impregnated with an inorganic gas blowing agent, and the obtained secondary expandable beads are heated and expanded within a mold for molding, thereby obtaining an expanded molded article.

In addition, the production method of an expandable TPU as described in PTL 2 includes a step of extruding TPU exhibiting a Shore hardness of A44 to A84 to obtain pellets having an average diameter of 0.2 to 10 mm; a step of impregnating the TPU pellets with 0.1 to 40%, based on the total weight of the pellets, of n-butane in an aqueous dispersion under pressure at a temperature ranging from 10 to 150°C; a step of cooling the dispersion containing the TPU pellets to a temperature of 20 to 95°C; and a step of depressurizing the TPU.

Furthermore, the production method of expansion-type TPU beads as described in PTL 3 includes a step in which 100 parts by weight of TPU beads and 0.1 to 5 parts by weight of a foam cell nucleating agent are uniformly mixed, these are then charged into an extruder, melted, and extruded in a linear form, this linear material is cooled in a water tank and molded, followed by cutting, or the molten material is extruded from a die and then granulated in water, to obtain TPU beads; and a step in which the TPU beads, 1 to 40 parts by weight of a blowing agent, and water are added in a pressure-resistant vessel, the expansion temperature is set to 110 to 135°C, the pressure in the pressure-resistant vessel is held at 10 to 25 bar, the temperature and the pressure in the pressure-resistant vessel are constantly held for 20 minutes, and the suspension in the pressure-resistant vessel is then discharged into the atmosphere, thereby obtaining expansion-type TPU beads.

In addition, the production method of a TPU foam as described in PTL 4 includes a step of adding TPU beads and water in a mass ratio of 1/0.8 to 1/4 in a reaction kettle; a step of adding carbon dioxide and controlling the pressure and temperature in the reaction kettle such that the carbon dioxide in the reaction kettle is in a super-critical state; a step of raising the temperature in the reaction kettle to 90 to 140°C and holding at that temperature; a step of charging the materials in the kettle into a pressure-held pressure tank, and primarily expanding the TPU beads; a step of charging the primarily expanded foam beads into a storage tank and performing secondary expansion at normal pressure to obtain TPU foam beads; a step of removing the surface moisture of the foam beads; and a step of curing the foam beads at normal pressure and normal temperature for 48 hours or more.

CN 104974370 describes a preparation method of thermoplastic polyurethane beads and high foaming thermoplastic polyurethanes (TPU) beads obtained through melting and granulating TPU, performing medium-temperature and high-pressure soakage, dissolution equilibrium, pressure relief and pre-foaming, saturated steam secondary foaming and other techniques. The obtained high foaming TPU beads are small in shrinkage ratio and smooth in surface.

WO2015/169164 discloses a coloured TPU foam material, a preparation method and a use thereof. The coloured TPU foam material has a hardness of shore A 5-65, a density of 0.05-0.5 g/cm$^3$, and an average cell size of less than 100 μm, providing features such as a good internal and external colour uniformity, and no wrinkles being present on the surface.

WO2015/52265 teaches a process for production of expanded thermoplastic elastomer beads in the presence of a gaseous medium that surrounds thermoplastic elastomer beads. The process comprises a) an impregnating step, b) an expanding step, in which the thermoplastic elastomer beads expand as they are exposed to a pressure reduction at a first expanding temperature Tb, and c) optionally a fusing step, in which the expanded thermoplastic elastomer beads are fused together at a fusing temperature Tc to form at least one shaped part.

EP 2719721 discloses an electrostatic dissipating molded article having a defined surface resistivity and being obtained by in-mold molding of multi-layered polyolefin-based resin expanded beads each having an polyolefin-based resin expanded core layer and a polyolefin-based resin cover layer which covers the polyolefin-based resin expanded core layer and which is formed from a polyolefin-based resin (A), a polymeric antistatic agent (B) of a block copolymer of a polyether block and a polyolefin block, and an electrically conductive carbon black (C), the components (A) to (C) being present in a specific proportion.

EP1683828 discloses expandable polylactic acid resin particles including (a) a base resin containing a polylactic acid resin having at least 50 mol % of lactic acid monomer component units, (b) a polyolefin wax in an amount of 0.0001 to 1 part by weight per 100 parts by weight of the base resin, and (c) a blowing agent in an amount of 1 to 30 % by weight based on the weight of the resin particles. The expandable resin particles can give expanded beads having an average cell diameter of 10 to 500 μm. The expanded beads can give in-mold foam moldings.

WO2016/194737 discloses expanded particles with which it is possible to obtain an expanded thermoplastic polyurethane particle molded article having excellent physical properties such as compression characteristics and impact resilience, and an expanded thermoplastic polyurethane particle molded article. The expanded thermoplastic polyurethane particles have a Shore A hardness of the thermoplastic polyurethane of 85 or higher, an average cell diameter of the expanded particles of 50-300 μm, and a closed cell ratio of 60% or higher when the expanded thermoplastic polyurethane particles are bisected.

Citation List

Patent Literature

PTL 1: JP 8-113664 A
PTL 2: US 2012/0329892 A
PTL 3: CN 104231592 A
PTL 4: CN 104194030 B
PTL 5: CN 104974370
PTL 6: WO2015/169164
PTL 7: WO2015/52265
PTL 8: EP 2719721
PTL 9: EP1683828

Summary of the Invention

Technical Problem

However, in the production method described in PTL 1, on producing the expanded TPU beads, uneven impregnation of the blowing agent into the TPU beads and uneven heating of the TPU beads are liable to occur, and therefore, in the obtained expanded TPU beads, scattering of cells and scattering of density among the expanded resin beads are liable to occur. Furthermore, the expanded TPU beads described in PTL 1 are too large in the bead diameter. Accordingly, the expanded bead molded article described in PTL 1 has large voids on the surface thereof.

In addition, PTL 2 discloses an example in which the TPU beads are expanded by using butane as the blowing agent. However, in this case, the cells of the obtained expanded beads become too fine, and therefore, the in-mold moldability of such expanded beads is poor. Accordingly, when subjecting the expanded beads described in PTL 2 to in-mold molding, voids are liable to be formed on the surface of the obtained molded article.

PTL 3 discloses an example in which the TPU beads are expanded by using, as the blowing agent, a hydrocarbon compound, such as butane and pentane. However, the cells of the obtained expanded beads become too fine. The in-mold moldability of such expanded beads is poor. In addition, PTL 3 discloses an example of using carbon dioxide as the blowing agent. However, the melt flow rate of the raw material TPU is too high, and therefore, expanded beads having a good cell structure are not obtained. The in-mold moldability of such expanded beads is poor. Accordingly, when subjecting the expanded TPU beads described in PTL 3 to in-mold molding, voids are liable to be formed on the surface of the obtained molded article, so that it is difficult to obtain a molded article having a smooth surface.

In PTL 4, the carbon dioxide in a super-critical state is used as the blowing agent, and therefore, in the primarily expanded beads, the cells in the expanded beads become too fine. Accordingly, it is necessary to control the cell diameter of the expanded beads by further expanding the primarily expanded beads through two-stage expansion. Accordingly, in the obtained expanded beads, scattering of cells and scattering of density among the expanded resin beads become large, so that the in-mold moldability is poor. In addition, the raw material pellets of TPU are expanded, and therefore, the diameter of the expanded beads becomes very large. Accordingly, when subjecting the expanded TPU beads described in PTL 4 to in-mold molding, voids are liable to be formed on the surface of the obtained molded article, so that it is difficult to obtain a molded article whose surface is smooth.

Then, an object of the present invention is to provide expanded TPU beads from which a molded article having less voids on the surface thereof can be obtained.

Solution to the Problem

The present inventors made extensive and intensive investigations. As a result, it has been found that by employing the following constitution, the foregoing problem can be solved, thereby leading to accomplishment of the present invention.

Specifically, the present invention is as follows.

(1) Expanded beads of thermoplastic polyurethane that are spherical expanded beads obtained through expansion of thermoplastic polyurethane beads, wherein the bead mass of the expanded beads is from 3 to 12 mg, and the ratio of the long diameter to the short diameter of the expanded bead (long diameter/short diameter) is 1.5 or less; the apparent density of the expanded beads is from 80 to 300 kg/m$^3$; the average cell diameter Da of the expanded beads is from 110 to 300 $\mu$m; and the closed cell ratio of the expanded beads is 80% or more.
Further, the variation coefficient of the cell diameter of the expanded beads, is 30% or less, the average cell diameter Ds of the cells positioning on the outermost surface side of the expanded beads is from 100 to 300 $\mu$m and the ratio of the average cell diameter Da to the average cell diameter Ds (Da/Ds) is more than 1.0 and 2.0 or less.
(2) The expanded beads of thermoplastic polyurethane as set forth in the above (1), wherein a melt flow rate (at 190°C under a load of 10 kg) of the expanded beads is from 1 to 60 g/10 min.
(3) The expanded beads of thermoplastic polyurethane as set forth in any one of the above (1) to (2) are obtained by a process as described in the claims, comprising heating for softening thermoplastic polyurethane beads dispersed in a dispersion medium in a pressure-resistant vessel; impregnating the thermoplastic polyurethane beads with carbon dioxide; and releasing the carbon dioxide-containing thermoplastic polyurethane beads in a softened state from the inside of the pressure-resistant vessel to a lower-pressure region than the pressure-resistant vessel, together with the dispersion medium, thereby achieving expansion.
Therein, the thermoplastic polyurethane beads are obtained through granulation by the under water cutting method.

Advantageous Effects of the Invention

In accordance with the present invention, it is possible to provide expanded beads of thermoplastic polyurethane from which a molded article with less voids on the surface thereof, whose surface is smooth, can be obtained.

Description of Embodiments

The present invention is hereunder illustrated and described in detail on the basis of embodiments thereof. In the following description, the wording "A to B" expressing a numerical value range indicates a numerical value range inclusive of A and B, each of which is an endpoint, and indicates "A or more and B or less" (when A<B), or "A or less and B or more" (when A>B).

The "part(s) by mass" and "% by mass" are synonymous with "part(s) by weight" and "% by weight", respectively.

[Expanded Beads]

The expanded TPU beads of the present invention are spherical expanded beads as defined in the claims, obtained through expansion of TPU beads, wherein the bead mass of the expanded beads is 3 to 12 mg, and the ratio of the long diameter to the short diameter of the expanded bead (long diameter/short diameter) is 1.5 or less; the apparent density of the expanded beads is 80 to 300 kg/m$^3$; the average cell diameter Da of the expanded beads is 110 to 300 $\mu$m; and the closed cell ratio of the expanded beads is 80% or more. The expanded beads of the present invention are hereunder described in more detail.

(TPU Beads)

The TPU beads which are used for the expanded TPU beads of the present invention are beads of TPU. In general, the TPU has a structure in which a soft segment composed of a long-chain polyol or a soft segment having a long-chain polyol component and a diisocyanate component urethane-bonded to each other and a hard segment having a short-chain glycol component and a diisocyanate component urethane-bonded to each other are mutually bonded to each other. This TPU may have a linear structure, or may have a partially crosslinked structure.

Examples of the long-chain polyol component of the soft segment include ester-based, adipate-based, ether-based, lactone-based, and carbonate-based polyol compounds. In the TPU, various physical properties, such as hardness and repulsion characteristics, can be controlled by changing a ratio of the soft segment and the hard segment or the kind of the long-chain polyol component.

From the viewpoints of expandability and in-mold moldability, the TPU preferably has a Shore A hardness of 80 to 95, and more preferably has a Shore A hardness of 85 to 90. The Shore A hardness is a value measured with a type A durometer on the basis of ASTM D2240-15.

The TPU is commercially available as Elastollan (product name), manufacture by BASF SE; DESMOPAN (product name), manufactured by Covestro AG; and so on.

(Shape of Expanded Beads)

The shape of the expanded beads of the present invention is spherical. According to this, when the expanded beads are subjected to in-mold molding, the filling properties become high, and a uniform molded article can be obtained. For example, a column has a shape having a ridge on the boundary between a side face and a bottom face. The wording "spherical" as referred to in the present invention means a shape not having such a ridge and is a concept inclusive of not only a true sphere but also a shape close to a true sphere, such as an ellipsoid.

(Beads Mass of Expanded Beads)

The bead mass of the expanded beads of the present invention is 3 to 12 mg. When the bead mass of the expanded beads is too small, there is a case where a good cell structure is not obtained in the expanded beads. In addition, when the bead mass is too small, the specific surface area of the expanded beads becomes too large, and therefore, when the expanded beads are subjected to in-mold molding, there is a concern that the gas escapes from the interiors of the cells of the expanded beads, the obtained molded article is liable to shrink. In addition, on heating the group of expanded beads at the time of in-mold molding with a heating medium, such as steam, the expanded beads are secondarily expanded to cause volume expansion, whereby gaps among the expanded beads are filled up. However, when the bead mass is too small, the gaps among the expanded beads become small at the stage when the expanded beads are filled in molding cavities (molding spaces), and therefore, gaps among the expanded beads at the early stage when heating with the heating medium is started are filled up. Accordingly, the heating medium is not sufficiently fed into the interior of the group of expanded beads, the expanded beads positioning in the interior of the group of expanded beads filled in the molding cavities are not heated, thereby likely causing a non-secondarily expanded state and/or a non-fused state. From such a viewpoint, a lower limit of the bead mass of the expanded beads is preferably 4 mg, and more preferably 5 mg. On the other hand, when the bead mass of the expanded beads is too large, curved surfaces which the expanded beads originally possess remain on the surface of the expanded beads molded article produced through in-mold molding of the expanded beads, and therefore, there is a case where the voids formed on the surface of the expanded beads molded article increase. From such a viewpoint, an upper limit of the bead mass of the expanded beads is preferably 10 mg, and more preferably 8 mg.

(Ratio of Long Diameter to Short Diameter of Expanded Bead (Long Diameter/Short Diameter)

The ratio of the long diameter to the short diameter of the expanded bead of the present invention (long diameter/short diameter) is 1.5 or less, preferably 1.3 or less, more preferably 1.2 or less, and still more preferably 1.1 or less. When the ratio of the long diameter to the short diameter of the expanded bead (long diameter/short diameter) is higher than 1.5, there is a case where when subjecting the expanded beads to in-mold molding, the filling properties of the expanded beads are worsened, so that a uniform molded article is not obtained. According to this, the voids formed on the surface of the molded article increase. The long diameter means a longest length of the expanded beads, and the short diameter means a maximum length of the expanded beads in the direction orthogonal to the long diameter.

(Average Cell Diameter Da of Expanded Beads)

The average cell diameter Da of the expanded beads of the present invention is 110 to 300 $\mu$m. When the average cell diameter Da of the expanded beads is lower than 80 $\mu$m, there is a case where the shape recovery of the expanded beads molded article after repeatedly performing compressive deformation is worsened. In addition, when the expanded beads are heated at the time of in-mold molding, the cells of the expanded beads are liable to cause foam-breaking, and therefore, the heating temperature of the expanded beads cannot be increased, and voids are liable to be formed on the surface of the expanded beads molded article produced through in-mold molding of the expanded beads. From such a viewpoint, a lower limit of the average cell diameter Da is 110 $\mu$m. On the other hand, when the average cell diameter Da is larger than 300 $\mu$m, there is a concern that an expanded beads molded article having desired mechanical physical properties is not obtained. From such a viewpoint, an upper limit of the average cell diameter Da is preferably 250 $\mu$m. The average cell diameter Da of the expanded beads can be determined in the following manner. First, the expanded bead is bisected so as to pass through the center of the expanded bead. Subsequently, an area of the cell cross section of each of the cells existent on the cut surface is measured, and a diameter of a virtual true circle having an area the same as the former area is defined as the cell diameter of each cell. This operation is then performed with respect to ten or more expanded beads randomly selected from the group of expanded beads, and the cell diameters of the respective cells as determined are arithmetically averaged, thereby defining the average cell diameter Da [$\mu$m] of the expanded beads.

(Variation Coefficient of Cell Diameter of Expanded Beads)

The variation coefficient of the cell diameter of the expanded beads is 30% or less. When the variation coefficient is small, an expanded beads molded article whose surface is smoother can be obtained. A lower limit of the variation coefficient is approximately about 10%. The variation coefficient of the cell diameter of the whole of the expanded beads can be determined by dividing a standard deviation [$\mu$m] of the cell diameter of each of the cells of the expanded beads as determined by the aforementioned method by the average cell diameter Da [$\mu$m] of the expanded beads.

(Average Cell Diameter Ds of Cells Positioning on the Outermost Surface Side of Expanded Beads)

(Ratio of Average Cell Diameter Da to Average Cell Diameter Ds (Da/Ds))

The average cell diameter Ds of the cells positioning on the outermost surface side of the expanded beads of the present invention is 100 to 300 $\mu$m, and the ratio of the average cell diameter Da to the average cell diameter Ds (Da/Ds) is more than 1.0 and 2.0 or less. The expanded beads having such a cell structure exhibit better in-mold moldability. From such a viewpoint, the lower limit of the average cell diameter Ds is 100 $\mu$m. On the other hand, the upper limit of the average cell diameter Ds is more preferably 250 $\mu$m, and still more preferably 200 $\mu$m. In addition, the upper limit of the ratio (Da/Ds) is more preferably 1.5, and still more preferably 1.2. The average cell diameter Ds of the cells positioning on the outermost surface side of the expanded beads can be calculated in the following manner. First, the expanded bead is bisected so as to pass through the center of the expanded bead. Subsequently, an area of the cell cross section of each cell positioning on the outermost surface side of the expanded beads, namely contacting with the surface layer of the expanded bead, is measured, and the diameter of a virtual true circle having an area the same as the former area is defined as the cell diameter of each cell. This operation is performed with respect to ten or more expanded beads randomly selected from the group of expanded beads, and the cell diameters of the respective cells as determined are arithmetically averaged, thereby defining the average cell diameter Ds [$\mu$m] of the cells positioning on the outermost surface side of the expanded beads.

(Apparent Density of Expanded Beads)

The apparent density of the expanded beads of the present invention is 80 to 300 kg/m$^3$, preferably 100 to 250 kg/m$^3$, and more preferably 120 to 200 kg/m$^3$. When the apparent density of the expanded beads is lower than 80 kg/m$^3$, on subjecting the expanded beads to in-mold molding, the strength of the cell film is insufficient, so that the obtained molded article excessively shrinks or deforms. In addition, there is a concern that the compressive strength of the produced expanded beads molded article is insufficient, so that its impact absorption performance is reduced, or there is a concern that the heat resistance is lowered. On the other hand, when the apparent density of the expanded beads is higher than 300 kg/m$^3$, when the expanded beads are subjected to in-mold molding, the expanded beads are not sufficiently secondarily expanded, and thus, voids increase in the obtained expanded beads molded article, and the surface smoothness is inferior. Furthermore, the weight of the obtained molded article becomes too heavy, and the flexibility of the molded article is insufficient, resulting in such a problem that desired cushioning properties are not obtained, or other problem.

The apparent density of the expanded beads can be measured in the following manner. First, the group of expanded beads is allowed to stand under conditions at a relative humidity of 50% and a temperature of 23°C under 1 atm for 2 days. Subsequently, a graduated cylinder charged with water at a temperature of 23°C is prepared, and an arbitrary amount of the group of expanded beads having been allowed to stand for 2 days (mass W1 of the group of expanded beads) is sunk in the water within the aforementioned graduated cylinder by using a tool, such as a wire net. A volume V1 [mL] of the group of expanded beads to be read from a rise of the water level is then measured taking into consideration the volume of the tool, such as a wire net. The apparent density [kg/m$^3$] of the expanded beads can be determined by dividing the mass W1 [g] of the group of expanded beads charged in the graduated cylinder by the volume V1 [mL] (W1/V1) and then performing unit conversion.

(Closed Cell Ratio of Expanded Beads)

The closed cell ratio of the expanded beads of the present invention is 80% or more, preferably 83% or more, and more preferably 85% or more. When the closed cell ratio of the expanded beads is lower than 80%, there is a case where the recovery of the expanded beads molded article at the time of repeatedly performing compression is worsened. In addition, the moldability of the expanded beads is worsened, and voids are liable to be formed on the surface of the expanded beads molded article produced through in-mold molding of the expanded beads. From such a viewpoint, though an upper limit of the closed cell ratio of the expanded beads is not particularly limited, the upper limit is preferably 100%. The closed cell ratio is a proportion of the volume of the closed cells relative to the volume of the whole of the cells in the expanded beads and can be determined using an air comparison pycnometer on the basis of ASTM D2856-70.

(Melt Flow Rate of Expanded Beads)

The melt flow rate at 190°C under a load of 10 kg of the expanded beads of the present invention is preferably 60 g/10 min or less, more preferably 50 g/10 min or less, and still more preferably 40 g/10 min or less. When the melt flow rate of the expanded beads is 60 g/10 min or less, fusion bonding properties of the expanded beads become especially good, it becomes easy to produce an expanded beads molded article through in-mold molding of the expanded beads, and the shape recovery of the expanded beads molded article obtained through in-mold molding of the expanded beads become good. On the other hand, a lower limit of the melt flow rate of the expanded beads is preferably 1 g/10 min, more preferably 5 g/10 min, and still more preferably 10 g/10 min. In the present specification, the melt flow rate is a value measured under conditions at a temperature 190°C under a load of 10 kg in conformity with JIS K7210-2:2014. At this time, a measurement sample in which its water content is controlled to 500 ppm or less is used.

[Production Method of Expanded Beads]

The expanded TPU beads of the present invention can be, for example, produced by a method including a step (A) of heating for softening TPU beads dispersed in a dispersion medium in a pressure-resistant vessel and impregnating the TPU beads with a physical blowing agent containing carbon dioxide; and a step (B) of releasing the physical blowing agent-containing TPU beads in a softened state from the inside of the pressure-resistant vessel to a lower-pressure region than the pressure-resistant vessel, together with the dispersion medium, thereby achieving expansion.

(Step (A))

In the step (A), the TPU beads dispersed in a dispersion medium in a pressure-resistant vessel are heated for softening, and the TPU beads are impregnated with a physical blowing agent.

<TPU Beads>

The TPU beads which are used in the step (A) can be produced by kneading the TPU and optionally, additives, such as a cell controlling agent, a colorant, an antioxidant, and a weathering agent, in an extruder to prepare a melt-kneaded material; and extruding the melt-kneaded material from the extruder, followed by performing a known granulation method. From the viewpoint of obtaining spherical TPU beads, as the granulation method, the under water cutting (UWC) method is adopted in which the melt-kneaded material immediately after extrusion is cut in water. By adopting the under water cutting method, in view of the fact that the production of spherical TPU beads is easy, a water temperature is set to preferably 5 to 70°C, more preferably 8 to 60°C, still more preferably 10 to 50°C, and especially preferably 15 to 40°C.
In order to obtain the spherical TPU beads, it is preferred to extrude the melt-kneaded material at an extrusion temperature at which a melt viscosity at a shear rate of 100 sec$^{-1}$ of the melt-kneaded material is 50 to 10,000 Pa·s. The temperature range within which the aforementioned melt viscosity falls can be, for example, measured using a measuring device, such as CAPILOGRAPH 1D, manufactured by Toyo Seiki Seisaku-sho, Ltd., and using an orifice having a nozzle diameter of 1.0 mm and a nozzle length of 10 mm. Specifically, first, a melt viscosity of a raw material which is used for production of the TPU beads (namely, TPU as the raw material; hereinafter referred to as "raw material TPU") at a shear rate of 100 sec$^{-1}$ (such a melt viscosity will be hereinafter also referred to simply as "raw material melt viscosity") is measured at a measurement temperature of {(melting point of the raw material TPU) + 100°C} (first measurement). Subsequently, the measurement temperature is decreased by 5°C relative to the measurement temperature of the first measurement, and the raw material melt viscosity is measured in the same manner (second measurement). Furthermore, the measurement temperature is decreased by 5°C relative to the measurement temperature of the second measurement, and the raw material melt viscosity is measured in the same manner. This operation is repeated until the raw material TPU does not flow. Then, on a semilogarithmic graph in which the ordinate is logarithmic, plotting the melt viscosity (Pa·s) at a shear rate of 100 sec$^{-1}$ as the ordinate and the measurement temperature as the abscissa, respectively, the raw material melt viscosity at each measurement temperature is plotted and interpolated, thereby determining a temperature of the range where the raw material melt viscosity is 50 to 10,000 Pa·s. An extrusion temperature of the aforementioned melt-kneaded material is also determined according to the melting temperature or melt viscosity of the raw material TPU used. For example, in the case of producing TPU beads by using the raw material TPU in which the melting temperature is 165°C, and the melt viscosity at a measurement temperature of 190°C and a shear rate of 100 sec$^{-1}$ is 2,070 Pa·s, the extrusion temperature of the melt-kneaded material is preferably 165 to 250°C, more preferably 170 to 240°C, still more preferably 175 to 235°C, and especially preferably 180 to 230°C.

When spherical TPU beads are used and expanded, spherical expanded beads having a ratio of the long diameter to the short diameter (long diameter/short diameter) of 1.5 or less, preferably 1.3 or less, more preferably 1.2 or less, and still more preferably 1.1 or less can be readily obtained.

On obtaining the aforementioned melt-kneaded material, the shearing at extrusion is preferably small within an extrudable range, and the extrusion temperature is also preferably low within an extrudable range. According to this, a rise of the melt flow rate of TPU by extrusion can be inhibited. The melt flow rate (at 190°C under a load of 10 kg) of the TPU beads (TPU after extrusion) is preferably 40 g/10 min or less. When the melt flow rate (at 190°C under a load of 10 kg) of the TPU beads is 40 g/10 min or less, the expandability of the TPU beads becomes good, and good-quality expanded beads having excellent moldability can be obtained. In addition, from the viewpoint of inhibiting a rise of the melt flow rate of the aforementioned melt-kneaded material, the discharge amount of the melt-kneaded material per one hole of a die at the time of production of the TPU beads is set to preferably 30 kg/hr or less, more preferably 20 kg/hr or less, and still more preferably 15 kg/hr or less. In addition, by producing the raw material beads by the under water cutting method, when the discharge amount is too low, the TPU beads are liable to be deformed due to an influence of a water current of cooling water. In view of the matter that spherical TPU beads are readily produced, the discharge amount is set to preferably 0.1 kg/hr or more, more preferably 0.2 kg/hr or more, and still more preferably 0.5 kg/hr or more.

An average mass per TPU bead is preferably 3 to 12 mg, more preferably 4 to 10 mg, and still more preferably 5 to 8 mg. The average mass of the TPU bead can be determined by randomly selecting 100 or more TPU beads, measuring the mass (mg), and dividing the measured mass by the number of beads. In order to produce the spherical TPU beads, it is preferred to control a hole diameter of the aforementioned die according to the average mass of the bead. In the case where it is contemplated to obtain beads having a small average mass, it is preferred to use a die having a small hole diameter, whereas in the case where it is contemplated to obtain beads having a large average mass, it is preferred to use a die having a large hole diameter. Specifically, when the discharge amount per hole is set to 10 kg, in the case where it is contemplated to obtain beads having an average mass of 3 mg, it is preferred to set the hole diameter of the die to about 1.3 mm; in the case where it is contemplated to obtain beads having an average mass of 7 mg, it is preferred to set the hole diameter of the die to about 1.7 mm; and in the case where it is contemplated to obtain beads having an average mass of 12 mg, it is preferred to set the hole diameter of the die to about 1.9 mm.

The melt flow rate at 190°C under a load of 10 kg of the raw material TPU is preferably 30 g/10 min or less, and more preferably 20 g/10 min or less. When the melt flow rate of the raw material TPU is 20 g/10 min or less, TPU beads having a desired melt flow rate can be obtained. Taking into consideration a load of the extruder at the time of production of beads, a lower limit of the melt flow rate of the raw material TPU is preferably 1 g/10 min.

<Pressure-Resistant Vessel>

The pressure-resistant vessel which is used in the step (A) is not particularly limited so long as it is a hermetically sealable vessel having pressure resistance. In view of the fact that the TPU beads dispersed in the dispersion medium in the pressure-resistant vessel are heated, the pressure in the heat-resistant vessel rises. The pressure-resistant vessel is required to withstand this rise of the pressure. The pressure-resistant vessel is, for example, an autoclave.

<Dispersion Medium>

The dispersion medium which is used in the step (A) is not particularly limited so long as it is a dispersion medium which does not dissolve the TPU therein. Examples of the dispersion medium include water, ethylene glycol, glycerin, methanol, and ethanol. The dispersion medium is preferably water.

<Dispersion>

The TPU beads are dispersed in the aforementioned dispersion medium. For example, the TPU beads are dispersed in the aforementioned dispersion medium by using a stirrer.

In the step (A), a dispersant may be added to the aforementioned dispersion medium. Examples of the dispersant include organic dispersants, such as polyvinyl alcohol, polyvinylpyrrolidone, and methyl cellulose; and sparingly soluble inorganic salts, such as aluminum oxide, zinc oxide, kaolin, mica, magnesium phosphate, and tripotassium phosphate. In addition, a surfactant can be further added to the aforementioned dispersion medium. Examples of the surfactant include sodium oleate, sodium dodecylbenzenesulfonate, and other anionic surfactants and nonionic surfactants which are generally used for suspension polymerization.

<Heating>

The temperature at which the TPU beads are heated is a temperature at which the TPU beads are softened, or higher. The heating temperature is preferably in a range of from 120 to 140°C, and more preferably a range of from 125 to 135°C. When the heating temperature is higher than 120°C, a rate of impregnation of the physical blowing agent into the TPU beads can be made high. When the impregnation is slow, the impregnation time must be made long, and decomposition of TPU is liable to occur. When the heating temperature is 140°C or lower, decomposition of TPU can be inhibited, whereby a lowering of moldability of the expanded TPU beads can be inhibited.

<Pressure in Pressure-Resistant Vessel>

The upper limit of the pressure in the pressure-resistant vessel when heating the TPU beads dispersed in the dispersion medium in the pressure-resistant vessel and impregnating the foregoing beads with the physical blowing agent is preferably 7.0 MPa(G), more preferably 5.0 MPa(G), still more preferably 4.5 MPa(G), and yet still more preferably 4.0 MPa(G). When the pressure in the pressure-resistant vessel at the time of impregnation with the physical bellowing agent is set to 7.0 MPa(G) or less, the cells of the obtained expanded beads can be inhibited from occurrence of microfabrication. On the other hand, from the viewpoint of impregnation properties of the physical blowing agent, a lower limit of the pressure in the pressure-resistant vessel at the time of impregnation with the physical blowing agent is preferably 2.0 MPa(G), and more preferably 2.5 MPa(G). Though a retention time when the pressure in the heat-resistant vessel is set to the aforementioned pressure is not particularly limited, it is typically about 10 to 30 minutes.

<Physical Blowing Agent>

Though it is preferred to use carbon dioxide as the physical blowing agent which is used in the step (A), other physical blowing agent may be used in combination so long as the expanded beads of the present invention can be obtained. Examples of the other physical blowing agent include inorganic physical blowing agents, such as air, nitrogen, argon, helium, oxygen, and neon; and organic physical blowing agents, such as aliphatic hydrocarbons, e.g., propane, normal butane, isobutane, normal pentane, isopentane, and normal hexane, alicyclic hydrocarbons, e.g., cyclohexane and cyclopentane, halogenated hydrocarbons, e.g., chlorofluoromethane, trifluoromethane, 1,1-difluoroethane, 1,1,1,2-tetrafluoroethane, methyl chloride, ethyl chloride, and methylene chloride, and dialkyl ethers, e.g., dimethyl ether, diethyl ether, and methyl ethyl ether. These can be used either alone or in combination of two or more thereof.
Though a total blending amount of the physical blowing agent is determined taking into consideration the apparent density of the objective expanded beads and the kind of TPU, it is preferred to use the physical blowing agent such that the blending amount of the physical blowing agent is typically 0.5 to 30 parts by mass based on 100 parts by mass of the TPU beads.

(Step (B))

In the step (B), the physical blowing agent-containing TPU beads in a softened state are released from the inside of the pressure-resistant vessel to a lower-pressure region than the pressure-resistant vessel, together with the dispersion medium, thereby achieving expansion. The aforementioned lower-pressure region is typically the atmosphere. According to this, the expanded TPU beads are produced.

(Expanded Beads Molded Article)

When the thus-produced expanded TPU beads are subjected to in-mold molding with steam as a heating medium to produce an expanded beads molded article, a pressure (molding pressure) of the steam is preferably 0.10 to 0.40 MPa(G), more preferably 0.15 to 0.35 MPa(G), and still more preferably 0.20 to 0.35 MPa(G).
From the viewpoint of decreasing voids formed on the surface of the expanded beads molded article, the apparent density of the expanded beads molded article is preferably 100 to 375 $kg/m^3$, more preferably 125 to 300 $kg/m^3$, and more preferably 150 to 250 $kg/m^3$.

Examples

Next, the present invention is described in more detail by reference to Examples, but it should be construed that the present invention is by no means limited by these Examples.

[Evaluation]

With respect to TPU beads used for production of expanded beads of the Examples and Comparative Examples, expanded beads, and molded articles produced using the expanded beads, the following evaluations were carried out.

(Bead Mass)

100 beads were randomly selected, the selected 100 beads were measured for the mass [mg] all together, and a value obtained by dividing the measured mass by 100 was defined as the bead mass [mg].

(Melt Flow Rate)

The melt flow rate of the TPU beads was measured under conditions of a temperature of 190°C under a load of 10 kg in conformity with JIS K7210-2:2014. A measurement sample obtained by vacuum drying the TPU beads at 80°C to control the water content in the beads to 500 ppm or less was used. In addition, with respect to the raw material TPU and expanded beads, the melt flow rate was measured after performing the drying in the same manner.

(Shape of TPU Beads)

(Ratio of Long Diameter to Short Diameter of TPU Bead (Long Diameter/Short Diameter) (Aspect Ratio))

The TPU beads were observed with an optical microscope, thereby examining the shape of the bead and the long diameter and short diameter of the bead. With respect to each sample, 50 beads were observed. Then, an arithmetically averaged value of the ratio of the long diameter to the short diameter (long diameter/short diameter) was determined.

The obtained expanded beads were conditioned by being allowed to stand in a constant-temperature and constant-humidity chamber under conditions at 23°C and a relative humidity of 50% under 1 atm for 2 days, and thereafter, the following measurements and evaluations were performed.

(Shape of Beads)

(Ratio of Long Diameter to Short Diameter of Expanded Bead (Long Diameter/Short Diameter) (Aspect Ratio))

The expanded beads were observed with an optical microscope, thereby examining the shape of the expanded bead and the long diameter and short diameter of the expanded bead. With respect to each sample, 50 beads were observed. Then, an arithmetically averaged value of the ratio of the long diameter to the short diameter (long diameter/short diameter) was determined.

(Closed Cell Ratio of Expanded Beads)

A value Vx of a true volume of the expanded bead (a sum of the volume of the TPU composition constituting the expanded beads and the whole volume of cells in a closed cell portion in the expanded bead) was measured in conformity with Procedures C described in ASTM D2856-70. For the measurement of this true volume Vx, an air comparison pycnometer 930 type, manufactured by Beckman-Toshiba, Co., Ltd. was used. Subsequently, the closed cell ratio was calculated according to the following formula (3). The measurement was performed five times using different measurement samples, and the measurement results of five times were arithmetically averaged to determine the close cell ratio of the expanded beads. An apparent volume of the expanded bead used for the measurement was determined by the water immersion method.

$$\text{Closed cell ratio (\%)} = (\text{Vx} - \text{W}/\rho) \times 100/(\text{Va} - \text{W}/\rho) \qquad (3)$$

Vx: True volume of expanded bead measured by the aforementioned method (cm$^3$)

Va: Apparent volume of expanded bead used for the measurement (a sum of the volume of the TPU composition constituting the expanded beads and the whole volume of cells in the expanded bead) (cm$^3$)

W: Weight of expanded bead used for the measurement (g)

$\rho$: Density of TPU composition constituting the expanded beads (g/cm$^3$)

(Average Bead Diameter of Expanded Beads)

(Apparent Density of Expanded Beads)

A graduated cylinder charged with water at a temperature of 23°C was prepared, and an arbitrary amount of the group of expanded beads (mass W1 of the group of expanded beads) was sunk in the water within the aforementioned graduated cylinder by using a wire net. A volume V1 [mL] of the group of expanded beads to be read from a rise of the water level was measured taking into consideration the volume of the wire net. By dividing this volume V1 by the number of expanded beads (N) charged in the graduated cylinder (V1/N), an average volume per expanded bead was calculated. A diameter of a virtual true circle having a volume the same as the obtained average volume was defined as the average particle diameter [mm] of the expanded beads. In addition, an apparent density [kg/m$^3$] of the expanded beads was determined by dividing the mass W1 [g] of the group of expanded beads charged in the graduated cylinder by the volume V1 [mL] (W1/V1) and then performing unit conversion.

(Average Cell Diameter Da of Expanded Beads)

First, the expanded bead was bisected so as to pass through the center of the expanded bead, and a cross-sectional photograph of the cut surface was taken by a scanning electron microscope. Subsequently, the electron microscopic photograph was analyzed with an image processing software (NonoHunter NS2K-Pro, manufactured by Nanosystem Co., Ltd.), an area of the cell cross section of each of the cells existent on the cut surface was measured, and a diameter of a virtual true circle having an area the same as the foregoing area was defined as the cell diameter of each cell. The determined cell diameter of the respective cells was then arithmetically averaged, thereby determining the average cell diameter of the expanded beads. This operation was performed with respect to ten expanded beads randomly selected, and the arithmetically averaged value of the obtained values was defined as the average cell diameter Da [μm] of the expanded beads. In addition, a variation coefficient [%] of the cell diameter was determined by dividing a standard deviation of the cell diameter determined from the cell diameter of each cell by the average cell diameter Da of the expanded beads. For the calculation of the standard deviation, unbiased variance was used.

(Average Cell Diameter Ds of Cells Positioning on the Outermost Surface Side of Expanded Beads)

First, the expanded bead was bisected so as to pass through the center of the expanded bead, and a cross-sectional photograph of the cut surface was taken by a scanning electron microscope. Subsequently, the electron microscopic photograph was analyzed with an image processing software (NonoHunter NS2K-Pro, manufactured by Nanosystem Co., Ltd.), an area of the cell cross section of each of the cells positioning on the outermost surface side of the expanded beads among the cells existent on the cut surface was measured, and a diameter of a virtual true circle having an area the same as the foregoing area was defined as the cell diameter of each cell. The determined cell diameter of the respective cells was arithmetically averaged, thereby determining the average cell diameter of the cells positioning on the outermost surface side of the expanded beads. This operation was performed with respect to ten expanded beads randomly selected, and the arithmetically averaged value of the obtained values was defined as the average cell diameter Ds [μm] of the cells positioning on the outermost surface side of the expanded beads.

The obtained expanded beads molded article was conditioned by being allowed to stand in a constant-temperature and constant-humidity room under conditions at 23°C and a relative humidity of 50% under 1 atm for 24 hours, and thereafter, the following measurements and evaluations were performed.

(Density of Molded Article)

First, a bulk volume [mm$^3$] was determined from the outside dimensions of the expanded beads molded article. Subsequently, a weight [g] of the expanded beads molded article was precisely weighed. The weight [g] of the expanded beads molded article was divided by the bulk volume [mm$^3$] and subjected to unit conversion, thereby determining a density [kg/m$^3$] of the molded article.

(Degree of Fusion Bonding of Molded Article)

The fusion bonding properties of the expanded beads molded article were evaluated by the following method. A test piece of 170 mm in length × 30 mm in width, having a thickness as it was, was cut out from the expanded beads molded article. One of the surfaces (molded skin surfaces) of this test piece was incised with a cutter knife in a depth of about 10 mm so as to bisect the length of the test piece in the thickness direction, and the molded article was bent from the incised part and fractured. A ratio (m/n × 100 [%]) of the number (m) of material-fractured expanded beads existent on the fractured surface to the number (n) of all of expanded beads existent on the fractured surface was calculated. In the case where even when the molded article was bent, it could not be fractured, the degree of fusion bonding was defined as 100%. The measurement was performed five times using different test pieces, and a rate of material fracture of each test piece was determined and then arithmetically averaged to evaluate the fusion bonding properties.

(Shrinkage Factor of Molded Article)

The length in the longitudinal direction of the expanded beads molded article was measured, thereby determining a shrinkage factor of the expanded beads molded article according to the following formula.

$$\text{Shrinkage factor of expanded beads molded article (\%)} = \{250 \text{ mm} - (\text{Longitudinal length of expanded beads molded article}) \text{ [mm]}\}/250 \text{ mm} \times 100$$

(Tensile Strength of Molded Article)

A tensile strength of the molded article was measured in conformity with JIS K6767:1999. First, a cutout piece of 120 mm × 25 mm × 10 mm was produced from the expanded beads molded article by using a vertical slicer such that all of the surfaces were a cutout surface. Subsequently, the cutout piece was cut into a No. 1 dumbbell specimen (measurement section of 40 mm in length × 10 mm in width × 10 mm in thickness) by using a fretsaw, thereby preparing a test piece. The test piece was subjected to a tensile test at a test speed of 500 mm/min, thereby measuring a maximum tensile stress at the time of tention. This maximum tensile stress was defined as the tensile strength of the molded article.

(Surface Properties of Molded Article)

A region of 100 mm × 100 mm was cut out as a test piece from a central part of the expanded beads molded article; lines were drawn in diagonals from corners of the test piece; the number of voids having a size of 1 mm × 1 mm or more was counted on the lines; and the evaluation was performed as follows.

The number of voids is 9 or less: A (good)
The number of voids is 10 or more: B (poor)

[Production of Expanded Beads and Expanded Beads Molded Articles by Examples and Comparative Examples]

Next, the production methods of expanded beards and expanded beads molded articles by Examples and Comparative Examples are described.

(Example 1)

<Production of TPU Beads>

As the TPU, DESMOPAN 9385AU (manufactured by Covestro AG, ether-based TPU, Shore A hardness: 86, MFR: 17 g/10 min (at 190°C under a load of 10 kg), melt viscosity: 2,100 Pa·s (at 190°C and 100 sec$^{-1}$; measurement temperature when the melt viscosity (100 sec$^{-1}$) is 10,000 Pa·s is 165°C) was pre-dried at 80°C for 4 hours and dry blended with, as a cell controlling agent, 10 g of talc having an average particle diameter of 7 $\mu$m (KHP-125B, manufactured by Hayashi Kasei Co., Ltd.), the blend was kneaded with a single-screw extruder having an inside diameter of 50 mm, and an extrusion temperature of the melt-kneaded material was set to 230°C. The melt-kncaded material was extruded for granulation from a die provided with four lips having a hole size of 1.4 mm into water by using the UWC (Under Water Cutting) system, thereby obtaining TPU beads having a bead mass of 5 mg and an aspect ratio of 1.3. A discharge amount of the melt-kneaded material per one hole of die lip was set to 10 kg/hr, and a water temperature of the water phase was set to 30°C.

<Production of Expanded TPU Beads>

1 kg of the obtained beads, 3 L of water as a dispersion medium, 1 g of kaolin as a dispersant, and 0.4 g of a sodium alkylbenzenesulfonate were charged in an autoclave having an internal volume of 5 L. The temperature of contents in the autoclave was raised to 130°C while stirring the contents in the autoclave, and carbon dioxide was fed under pressure at 130°C until the pressure in the autoclave reached 4.0 MPa in terms of a gauge pressure, followed by keeping at 130°C for 15 minutes. After completion of keeping, the contents in the autoclave were released under atmospheric pressure to expand the TPU beads containing carbon dioxide as the physical blowing agent, thereby obtaining expanded TPU beads.

After drying the obtained expanded beads in an oven at 40°C for 12 hours, the expanded beads were charged into a pressure-resistant vessel and pressurized with compressed air to 0.3 MPa (G) over 12 hours, and thereafter, the resultant was further allowed to stand for 12 hours, thereby recovering the shrunk expanded beads. Thereafter, the resultant was reduced in pressure to atmospheric pressure for 10 minutes and aged in the oven at 40°C for 24 hours, and the pressure within the expanded beads was then returned to the atmospheric pressure. Thereafter, 0.52 parts by mass of AQUALIC DS40S (a product name of Nippon Shokubai Co., Ltd.; sodium polyacrylate, amount of active ingredient: 44% by mass) was added to 100 parts by mass of the expanded beads, thereby coating the expanded beads with a surfactant containing sodium polyacrylate.

<Production of Expanded Beads Molded Article>

In a mold having a tabular shaped molding cavity of 250 mm in width × 200 mm in length × 20 mm in thickness, the expanded beads were filled in a state of taking a cracking of 20 mm (length in the thickness direction of molding cavity: 40 mm); the mold was completely closed (length in the thickness direction of molding cavity: 20 mm); and steam under a pressure of 0.30 MPa(G) was introduced into the molding cavity to heat the expanded beads, thereby subjecting the expanded beads to mutual fusion bonding. After cooling, the mold was taken out to obtain an expanded beads molded article.

(Example 2)

Expanded TPU beads were produced in the same manner as in Example 1, except that the hole size of each of the die lips of the UWC system was changed from 1.4 mm to 1.9 mm, thereby producing TPU beads. Then, using these expanded TPU beads, an expanded beads molded article was produced in the same manner as in Example 1.

(Comparative Example 1)

Expanded TPU beads were produced in the same manner as in Example 2, except that the strand cutting method was adopted in place of the UWC system. Then, using these expanded TPU beads, an expanded beads molded article was produced in the same manner as in Example 1. The hole size of each of the die lips was set to 2.0 mm, and the discharge amount of the melt-kneaded material per one hole of die lip was set to 3 kg.

(Comparative Example 2)

Expanded TPU beads were produced in the same manner as in Example 1, except that the hole size of each of the die lips of the UWC system was changed from 1.4 mm to 0.8 mm, thereby producing TPU beads. Then, using these expanded TPU beads, an expanded beads molded article was produced in the same manner as in Example 1, except that the molding steam pressure was changed from 0.30 MPa(G) to 0.05 MPa(G).

(Comparative Example 3)

Expanded TPU beads were produced in the same manner as in Example 1, except that the hole size of each of the die lips of the UWC system was changed from 1.4 mm to 2.0 mm, thereby producing TPU beads. Then, using these expanded TPU beads, an expanded beads molded article was produced in the same manner as in Example 1, except that the molding steam pressure was changed from 0.30 MPa(G) to 0.33 MPa(G).

(Comparative Example 4)

Expanded TPU beads were produced in the same manner as in Example 1, except that as the TPU, Elastollan 1180A (manufactured by BASF SE, ether-based TPU, Shore A hardness: 79, MFR: 43 g/10 min (at 190°C under a load of 10 kg), melt viscosity: 900 Pa·s (at 190°C and 100 sec$^{-1}$; measurement temperature when the melt viscosity (100 sec$^{-1}$) is 10,000 Pa·s is 148°C) was used in place of the DESMOPAN 9385AU; and that the extrusion temperature of the melt-kneaded material was set to 210°C. Then, using these expanded TPU beads, an expanded beads molded article was produced in the same manner as in Example 1, except that the molding steam pressure was changed from 0.30 MPa(G) to 0.10 MPa(G).

(Comparative Example 5)

An expanded beads molded article was produced in the same manner as in Comparative Example 4, except that the molding steam pressure was changed from 0.10 MPa(G) to 0.30 MPa(G).

(Comparative Example 6)

Expanded TPU beads were produced in the same manner as in Example 2, except that the temperature of the contents in the autoclave was raised to 90°C, carbon dioxide was fed under pressure at 90°C until the pressure in the autoclave reached 10.0 MPa in terms of a gauge pressure, and after keeping at 90°C for 15 minutes, the contents in the autoclave were released under atmospheric pressure. When the temperature in the autoclave is 95°C, and the pressure is 10.0 MPa in terms of a gauge pressure, the carbon dioxide is in a super-critical state. Then, using these expanded TPU beads, an expanded beads molded article was produced in the same manner as in Example 1, except that the molding steam pressure was changed from 0.30 MPa(G) to 0.20 MPa(G).

[Evaluation Results]

The evaluation results of the foregoing Examples and Comparative Examples are shown in Table 1.

Table 1: Evaluation Results of Examples and Comparative Examples

| | | Example 1 | Example 2 | Comparative Example 1 | Comparative Example 2 | Comparative Example3 | Comparative Example 4 | Comparative Example 5 | Comparative Example 6 |
|---|---|---|---|---|---|---|---|---|---|
| Beads | Thermoplastic polyurethane | 9385AU | 9385AU | 9385AU | 9385AU | 9385AU | 1180A | 1180A | 9385AU |
| | Bead shape | Ellipsoidal | Ellipsoidal | Columnar | Ellipsoidal | Ellipsoidal | Ellipsoidal | Ellipsoidal | Ellipsoidal |
| | Bead mass [mg] | 5 | 10 | 10 | 0.5 | 15 | 5 | 5 | 10 |
| | MFR [p/10 min][*1] | 36 | 36 | 36 | 36 | 36 | 70 | 70 | 36 |
| | Aspect ratio | 1.3 | 1.3 | 2.0 | 1.1 | 1.3 | 1.3 | 1.3 | 1.3 |
| Expanded beads | Expanded bead shape | Ellipsoidal | Ellipsoidal | Columnar | Ellipsoidal | Ellipsoidal | Ellipsoidal | Ellipsoidal | Ellipsoidal |
| | Bead mass [mg] | 5 | 10 | 10 | 0.5 | 15 | 5 | 5 | 10 |
| | Long diameter [mm] | 3.6 | 5.5 | 6.0 | 1.8 | 6.0 | 3.6 | 3.6 | 5.5 |
| | Short diameter [mm] | 2.8 | 4.2 | 3.0 | 1.7 | 4.5 | 2.8 | 2.8 | 4.2 |
| | Aspect ratio | 1.3 | 1.3 | 2.0 | 1.1 | 1.3 | 1.3 | 1.3 | 1.3 |
| | Closed cell ratio [%] | 85 | 85 | 85 | 70 | 85 | 76 | 76 | 85 |
| | Apparent density [kg/m$^3$] | 160 | 160 | 160 | 160 | 160 | 210 | 210 | 160 |
| | MFR [g/10 min] | 37 | 37 | 37 | 37 | 37 | 78 | 78 | 37 |
| | Average cell diameter (Da) of the whole [μm] | 120 | 118 | 120 | 110 | 96 | 220 | 220 | 10 |
| | Variation coefficient of cell diameter of the whole [%] | 20 | 20 | 35 | 20 | 20 | 30 | 30 | 40 |
| | Average cell diameter (Ds) of surface layer [μm] | 110 | 106 | 110 | 100 | 95 | 160 | 160 | 8 |
| | (Da)/(Ds) | 1.1 | 1.1 | 1.1 | 1.0 | 1.0 | 1.4 | 1.4 | 1.3 |

EP 3 438 174 B1

(continued)

| Molded article | Molding pressure [MPa(G)] | Example 1 | Example 2 | Comparative Example 1 | Comparative Example 2 | Comparative Example3 | Comparative Example 4 | Comparative Example 5 | Comparative Example 6 |
|---|---|---|---|---|---|---|---|---|---|
|  | Molding pressure [MPa(G)] | 0.30 | 0.30 | 0.30 | 0.05 | 0.33 | 0.10 | 0.30 | 0.20 |
|  | Density [kg/m$^3$] | 210 | 200 | 200 | 300 | 200 | 270 | 500 | 300 |
|  | Degree of fusion bonding [%] | 100 | 100 | 100 | 20 | 100 | 20 | 20 | 20 |
|  | Shrinkage factor [%] | 6 | 6 | 6 | 14 | 6 | 10 | 20 | 14 |
|  | Tensile strength [MPa] | 1.35 | 1.25 | 1.25 | Not evaluated | 1.25 | Not evaluated | Not evaluated | Not evaluated |
|  | Surface properties | A | A | B | B | B | B | B | B |
| *1 Condition: Measurement temperature: 190°C, load: 10 kg (pre-drying at 80°C for 4 hours) | | | | | | | | | |

In the expanded beads of Examples 1 and 2, the bead mass fell within a range of from 3 to 12 mg, the ratio of long diameter to short diameter (long diameter/short diameter) (aspect ratio) was 1.5 or less, the apparent density fell within a range of from 80 to 300 kg/m$^3$, the average cell diameter Da of the expanded beads fell within a range of 80 to 300 $\mu$m, and the close cell ratio was 80% or more, and therefore, the surface properties of the molded articles produced using the foregoing expanded beads were good.

On the other hand, in the expanded beads of Comparative Example 1, the ratio of long diameter to short diameter (long diameter/short diameter) (aspect ratio) was higher than 1.5, and therefore, the surface properties of the molded article produced using the foregoing expanded beads were poor.

In addition, in the expanded beads of Comparative Example 2, the bead mass was lower than 3 mg, and the closed cell ratio was lower than 80%, and therefore, even when the molding steam pressure was decreased at the time of in-mold molding, the cell structure of the expanded beads was liable to be fractured, and the obtained expanded beads molded article was not good in the fusion bonding properties and was poor in the surface properties.

In the expanded beads of Comparative Example 3, the bead mass was higher than 12 mg, and therefore, the surface properties of the molded article produced using the foregoing expanded beads were poor.

In Comparative Example 4, the closed cell ratio was lower than 80%, and therefore, the molded article produced using the foregoing expanded beads was not good in the fusion bonding properties and was poor in the surface properties, too. In addition, even when the molding steam pressure was increased, the fusion bonding properties and the surface properties were not improved (Comparative Example 5).

In the expanded beads of Comparative Example 6, the average cell diameter Da of the whole of the expanded beads was smaller than 80 $\mu$m, and therefore, the cell structure of the expanded beads was liable to be fractured at the time of in-mold molding, and the obtained expanded beads molded article was not good in the fusion bonding properties and was poor in the surface properties, too.

**Claims**

1. Expanded beads of thermoplastic polyurethane that are spherical expanded beads obtained through expansion of thermoplastic polyurethane beads, wherein
   the bead mass of the expanded beads is from 3 to 12 mg, and the ratio of the long diameter to the short diameter of the expanded bead (long diameter/short diameter) is 1.5 or less;
   the apparent density of the expanded beads, measured in the manner as defined in the specification, is from 80 to 300 kg/m$^3$;
   the average cell diameter Da of the expanded beads, determined in the manner as defined in the specification, is from 110 to 300 $\mu$m;
   the variation coefficient of the cell diameter of the expanded beads, determined as defined in the specification, is 30% or less;
   the average cell diameter Ds of the cells positioning on the outermost surface side of the expanded beads, calculated in the manner as defined in the specification, is from 100 to 300 $\mu$m;
   the ratio of the average cell diameter Da to the average cell diameter Ds (Da/Ds) is more than 1.0 and 2.0 or less; and
   the closed cell ratio of the expanded beads, determined using an air comparison pycnometer on the basis of ASTM D2856-70, is 80% or more.

2. The expanded beads of thermoplastic polyurethane according to claim 1, wherein the melt flow rate (at 190°C under a load of 10 kg) of the expanded beads is from 1 to 60 g/10 min.

3. A process for preparing the expanded beads of thermoplastic polyurethane according to claim 1 or 2, wherein the expanded beads are obtained by dispersing in a dispersion medium in a pressure-resistant vessel spherical thermoplastic polyurethane beads, wherein the bead mass of the thermoplastic polyurethane beads is from 3 to 12 mg and the ratio of the long diameter to the short diameter of the thermoplastic polyurethane bead (long diameter/short diameter) is 1.5 or less; heating for softening the thermoplastic polyurethane beads dispersed in the dispersion medium in the pressure-resistant vessel; impregnating the thermoplastic polyurethane beads with carbon dioxide at a pressure of from 2.0 to 5.0 MPa (G) in the pressure-resistant vessel; and releasing the carbon dioxide-containing thermoplastic polyurethane beads in a softened state from the inside of the pressure-resistant vessel to a lower-pressure region than the pressure-resistant vessel, together with the dispersion medium, thereby achieving expansion, and wherein the thermoplastic polyurethane beads are obtained through granulation by the under water cutting method.

**Patentansprüche**

1. Expandierte Kügelchen aus thermoplastischem Polyurethan, die sphärische expandierte Kügelchen sind, die durch Expandieren von thermoplastischen Polyurethankügelchen erhalten werden, wobei

   die Kügelchenmasse der expandierten Kügelchen 3 bis 12 mg beträgt und das Verhältnis des langen Durchmessers zum kurzen Durchmesser des expandierten Kügelchens (langer Durchmesser/kurzer Durchmesser) 1,5 oder weniger beträgt;

   die scheinbare Dichte der expandierten Kügelchen, gemessen auf die in der Beschreibung definierte Weise, von 80 bis 300 [kg/m$^3$] beträgt;

   der durchschnittliche Zelldurchmesser Da der expandierten Kügelchen, gemessen auf die in der Beschreibung definierte Weise, zwischen 110 und 300 $\mu$m liegt;

   der Variationskoeffizient des Zelldurchmessers der expandierten Kügelchen, bestimmt auf die in der Beschreibung festgelegte Weise, 30 % oder weniger beträgt;

   der durchschnittliche Zelldurchmesser Ds der Zellen, die sich auf der äußersten Oberflächenseite der expandierten Kügelchen befinden, berechnet auf die in der Beschreibung definierte Weise, zwischen 100 und 300 $\mu$m liegt;

   das Verhältnis des durchschnittlichen Zelldurchmessers Da zu dem durchschnittlichen Zelldurchmesser Ds (Da/Ds) größer als 1,0 und 2,0 oder kleiner ist; und

   das geschlossene Zellverhältnis der expandierten Kügelchen, bestimmt mit einem Luftvergleichspyknometer auf der Basis von ASTM D2856-70, 80% oder mehr beträgt.

2. Die expandierten Kügelchen aus thermoplastischem Polyurethan nach Anspruch 1, wobei die Schmelzflussrate (bei 190°C unter einer Last von 10 kg) der expandierten Kügelchen von 1 bis 60 g/10 min beträgt.

3. Ein Verfahren zur Herstellung der expandierten Kügelchen aus thermoplastischem Polyurethan nach Anspruch 1 oder 2, wobei die expandierten Kügelchen durch Dispergieren von sphärischen Kügelchen aus thermoplastischem Polyurethan in einem Dispersionsmedium in einem druckfesten Gefäß erhalten werden, wobei die Kügelchenmasse der thermoplastischen Polyurethankügelchen 3 bis 12 mg beträgt und das Verhältnis des langen Durchmessers zum kurzen Durchmesser des thermoplastischen Polyurethankügelchens (langer Durchmesser/kurzer Durchmesser) 1,5 oder weniger beträgt; Erwärmen zum Erweichen der in dem Dispersionsmedium dispergierten thermoplastischen Polyurethankügelchen in dem druckbeständigen Behälter; Imprägnieren der thermoplastischen Polyurethankügelchen mit Kohlenstoffdioxid bei einem Druck von 2,0 bis 5,0 MPa (G) in dem druckbeständigen Behälter; und Freisetzen der Kohlenstoffdioxid enthaltenden thermoplastischen Polyurethankügelchen in einem erweichten Zustand aus dem Inneren des druckbeständigen Behälters in einen Bereich mit niedrigerem Druck als der des druckbeständigen Behälters zusammen mit dem Dispersionsmedium, wodurch eine Expansion erreicht wird, und wobei die thermoplastischen Polyurethankügelchen durch Granulierung durch das Unterwasser-Schneidverfahren erhalten werden.

**Revendications**

1. Billes expansées en polyuréthane thermoplastique, qui sont des billes expansées sphériques obtenues par l'expansion des billes en polyuréthane thermoplastique, dans lequel

   la masse de bille des billes expansées est comprise entre 3 et 12 mg et le rapport du diamètre long au diamètre court de la bille expansée (diamètre long/diamètre court) est 1,5 ou moins ;

   la densité apparente des billes expansées, mesurée de la manière définie dans la description est comprise entre 80 et 300 [kg/m$^3$] ;

   le diamètre moyen de cellule Da des billes expansées, déterminé de la manière définie dans la description est compris entre 110 et 300 $\mu$m ;

   le coefficient de variation du diamètre de cellule des billes expansées, déterminé de la manière définie dans la description est 30 % ou moins ;

   le diamètre moyen de cellule Ds des cellules disposées sur la surface extérieure des billes expansées, calculé de la manière définie dans la description est compris entre 100 et 300 $\mu$m ;

   le rapport du diamètre moyen de cellule Da au diamètre moyen de cellule Ds (Da/Ds) est plus de 1,0 et 2,0 ou moins ; et le rapport de cellule fermé des billes expansées, déterminé en utilisant un pycnomètre de comparaison d'air sur la base de ASTM D2856-70 est 80 % ou plus.

2. Billes expansées en polyuréthane thermoplastique selon la revendication 1, dans lequel la vitesse d'écoulement en masse fondue (à 190°C sous une charge de 10 kg) des billes expansées est comprise entre 1 et 60 g/10 min.

**3.** Procédé de préparation des billes expansées en polyuréthane thermoplastique selon la revendication 1 ou la revendication 2, dans lequel les billes expansées sont obtenues par dispersion des billes en polyuréthane thermoplastique sphériques dans un milieu de dispersion dans un récipient résistant à la pression, dans lequel la masse de bille des billes en polyuréthane thermoplastique est comprise entre 3 et 12 mg et le rapport du diamètre long au diamètre court de la bille en polyuréthane thermoplastique (diamètre long/diamètre court) est 1,5 ou moins ; on chauffe les billes en polyuréthane thermoplastique dispersées dans le milieu de dispersion dans le récipient résistant à la pression pour les adoucir ; on imprègne les billes en polyuréthane thermoplastique avec le dioxyde de carbone sous une pression comprise entre 2,0 et 5,0 MPa (G) dans le récipient résistant à la pression ; et on sort les billes en polyuréthane thermoplastique contenant du dioxyde de carbone dans un état adouci de l'intérieur du récipient résistant à la pression et on les place dans une zone à pression plus faible que la pression dans le récipient résistant à la pression, ensemble avec le milieu de dispersion, et ainsi on obtient une expansion, et dans lequel les billes en polyuréthane thermoplastique sont obtenues par moyen de granulation à l'aide du procédé de coupe sous eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104974370
- WO 2015169164 A
- WO 201552265 A
- EP 2719721 A
- EP 1683828 A

- WO 2016194737 A
- JP 8113664 A
- US 20120329892 A
- CN 104231592 A
- CN 104194030 B